# EUROPEAN PATENT APPLICATION

(11) **EP 1 237 311 A2**
(43) Date of publication of application: **04.09.2002**
(21) Application number: 02290191.2
(22) Date of filing: 29.01.2002
(51) Int. Cl.: H04J 3/08, H04J 3/14, H04L 12/437

(54) **Method for managing the transition from a ring failure to a span failure in telecommunications networks with a ring topology**

(30) Priority: 26.02.2001 IT MI010382
(71) Applicant: ALCATEL, 75008 Paris (FR)
(72) Inventor: Manganini, Andrea, 20058 Villasanta, Milano (IT); Casazza, Elena, 24045 Fara Gera d'Adda, Bergamo (IT)
(74) Representative: Colombo, Stefano Paolo

(57) **Abstract**

Described is a method for managing the transition between a ring failure and a span failure in a telecommunication network with a ring topology protected by a traffic protection mechanism. The method is characterized by the steps of verifying that the protection channels (LP) have been restored; in the affirmative, maintaining the protection corresponding to a ring event for a predetermined time; and, once such predetermined time has elapsed, managing the event as a span event. The time is computed by a timer and it is preferably equal to the Wait Time to Restor (WTR). The method allows the exploitation of the resources available in the ring network in an optimal manner.

## Description

The present invention pertains to the field of telecommunications ring networks and in particular concerns four-fiber networks with a ring topology whose traffic is protected by an MS-SPRING distributed mechanism. Still more in particular it is concerned with a method for managing in an optimized manner transitions from ring failures to span failures.

In the field of telecommunications, fiber-optic networks with ring topology, comprising a number of nodes or network elements connected one to each other by fiber spans so as to form a ring, are known. The traffic in such networks is carried over so-called paths, i.e. circuits connecting two or more network elements of the ring.

Mechanisms for traffic protection in such networks are also known. Among these, one kind of distributed mechanism, called MS-SPRING (Multiplexed Section - Shared Protection Ring), is well known.

In the transoceanic SDH communications with a four-fiber ring topology wherein the protection is of an MS-SPRING type, the available band is subdivided into two parts: the high-priority channels (to be protected in the event of a failure on the ring) and the low-priority channels (which are unprotected and, in the event of a failure, are dropped). Along the transmission direction, two adjacent nodes are interconnected by four fibers (two in one direction and two in the opposite direction); the high-priority channels (denoted by HP) occupy, in the absence of failures, the working fiber, while the low-priority channels (LP) occupy the protection fiber, until the latter is required to perform protection on the ring.

In such networks, a span failure is referred to as the breaking (or the degrade) of one or both working fibers connecting two nodes, or the breaking of one or both protection fibers; in the first case, the span protection contemplates that all the HP traffic be restored by re-routing it over the protection fiber of the same span. Instead, a ring failure is referred to as the breaking (or the degrade) of both working and protection fibers between two adjacent nodes. In this case a ring protection is contemplated which provides for re-routing the HP traffic, that would be lost because of the breaking, in a direction opposite to the failure by utilizing the LP channels.

The problem, common to all the protection mechanisms, consists in protecting and saving the largest possible amount of HP traffic.

The ring topology assures that, in the event of a single failure, all the high-priority traffic is restored. However, the situation becomes critical when a ring failure is present in the ring, which ring failure is repaired by two stages, i.e. first the protection channels are repaired and only thereafter the high-priority channels are repaired.

The ring network protection management is standardized by the international organizations ITU (ITU-T Recommendation G.841, Annex A) and ETSI. In both the specifications, the protection protocol is based on a pair of bytes K1, K2 of the SDH (or SONET) frame, in particular of its MSOH section. Byte K1 is coded in the following manner: its first four bits carry request codes while the next four bits carry the destination node identifications (ID) for the request code indicated in the first four bits. The functions of the K2 byte are as follows: the first four bits carry source node identifications; the last three bits define the status code while the fifth bit represents a path length code (0 = short path, 1= long path).

The failure or command code, for which a coordinated action of the ring nodes is needed, is inserted in the field of the request.

The ITU-T Recommendations G.841 and G. 841 Annex A impose to take no actions when the protection fiber becomes available after the occurrence of ring failure on the same span. Therefore, the ring protection is maintained (even though, indeed, the failure on the span would no longer be declarable as a ring failure), until the working fiber becomes available too. The object of this behavior is to avoid a double switch: the first in the event that the ring protection is removed and the second in the event that the span protection is managed/served.

It has been observed that the management proposed by the ITU-T Recommendations G.841 and G.841 Annex A resulted in the following main drawbacks:
- if a span degrade appears on another span of the ring, this can not be protected because it has a lower priority than SF-R; the high-priority channel remains degraded even if network resources are available to allow the full restoration of the quality of signal; and
- the low-priority traffic will remain dropped (pre-empted to allow for the ring protection).

Concluding, a ring protection condition is maintained on the ring also when the network resources would allow the switch-over to a span protection; this would release the LP band that instead could be used for span protections on other spans.

In view of the drawbacks and deficiencies of the known and standardized solutions described above, the main object of the present invention is to provide a method for managing the transition between a ring failure and a span failure in telecommunications networks (in particular transoceanic) with a four-fiber ring topology so as to better utilize the available resources.

This and further objects are achieved by a method having the characteristics set forth in the independent claim 1 and a network element according to claim 4. Further advantageous characteristics are set forth in the dependent claims.

The basic idea of the present invention consists in managing the failure really present in the network, namely the failure on the working fiber, when the alarm of the protection fiber ceases; the ring protection is released and the span protection is managed. The use of timers is provided to avoid that possible oscillations of the alarms on the fiber can result in HP traffic interrupts.

The invention will certainly result in being clear from the following detailed description, given by way of example and not of limitation, to be read with reference to the attached figures, wherein:
- Fig. 1 shows a four-fiber telecommunications network in a ring topology unaffected by any failure;
- Fig. 2 shows the same network of Fig. 1 affected by a ring failure;
- Fig. 3 shows how the situation where the failure on the protection fiber has been cleared but the failure on the working fiber (span failure) still remains at least in one direction, is at present managed;
- Fig. 4 shows how the situation where the failure on the protection fiber has been cleared but the failure on the working fiber (span failure) still remains at least in one direction, is managed in accordance with the invention; and
- Fig. 5 shows a time-space graph that schematically summarizes the various signalings travelling through the ring, starting from the ring-failure situation up to the complete management of a span failure.

Before entering into a detailed description of the present invention, it is deemed useful to point out that the latter is also applicable to every type of synchronous transmission, typically SDH and SONET. However, for clarity, it has been preferred to make reference to SHD only. Therefore, every reference made, in this description and in the claims, to SDH synchronous transmissions, is to be indented as including also the SONET transmissions, unless it is specifically indicated otherwise.

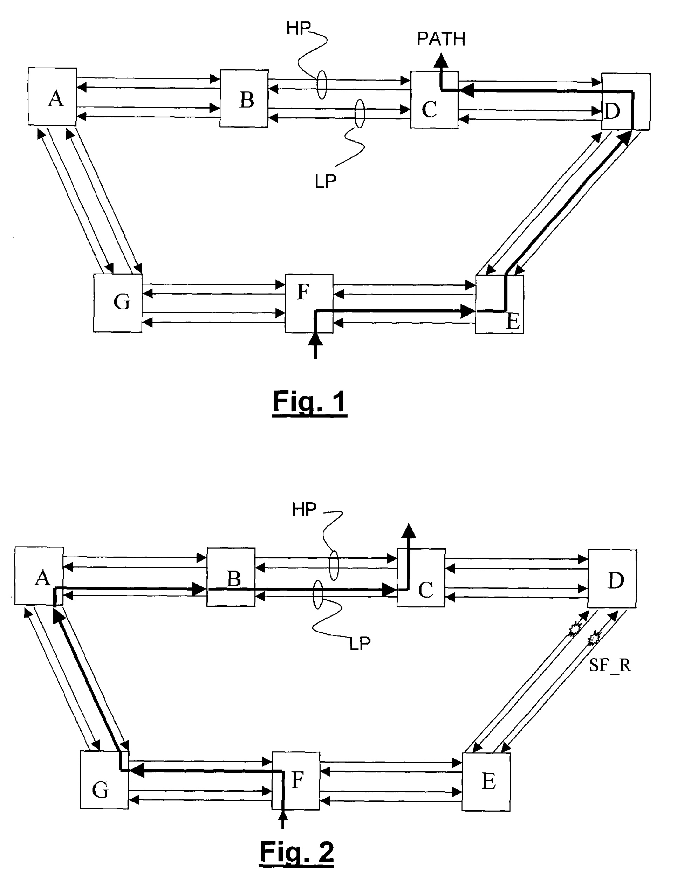

Fig. 1 shows a ring network with a plurality of nodes (A, B, ..., G) connected by four-fiber spans that are schematically represented by arrows: a pair of arrows representing the working channels (HP) and the other pair representing the protection channels (LP). At least one protected path is installed in the ring to carry information from one node to another. For clarity only one path is shown; the path enters at F and comes out at C (C and F are termed "terminating nodes") and passing through the intermediate nodes F and D.

With reference to Fig. 2 (where the original protected path is no longer indicated for clarity), a ring failure (SF_R, Signal Fail_Ring) on a span (E-D) is managed by utilizing the ring portion unaffected by the failure, namely the one where nodes G, A and B are intermediate nodes. All this to re-configure, by utilizing the LP flows of said ring portion, the HP flows that were lost because they passed through the span where the ring failure is present.

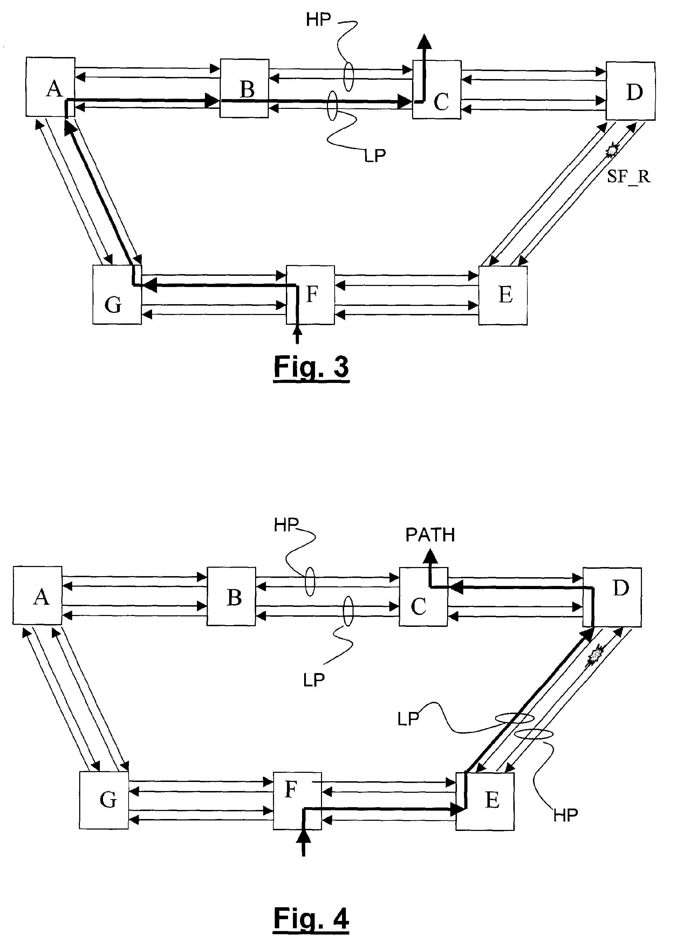

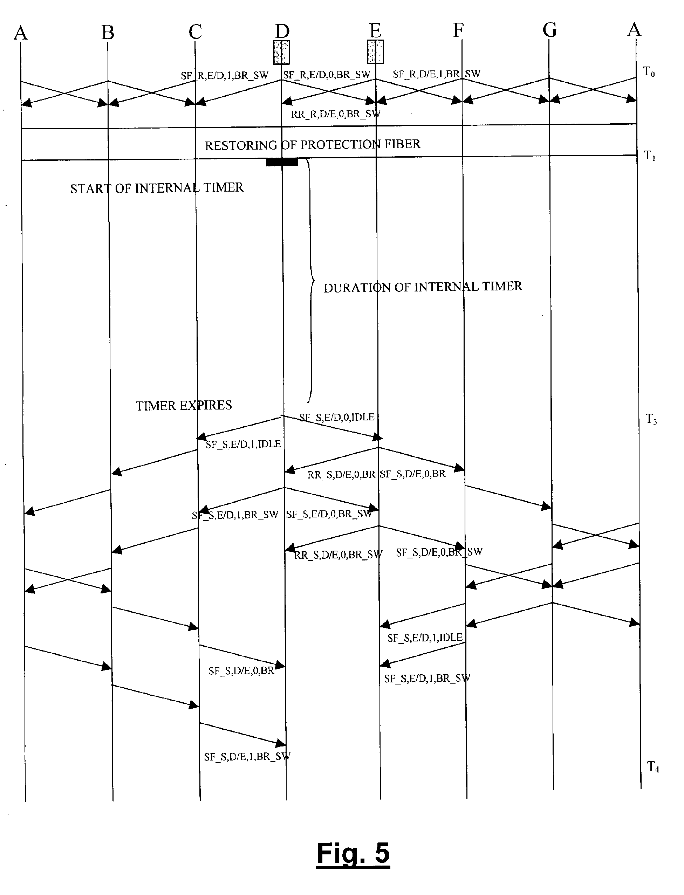

Often, especially in transoceanic ring networks having spans that are also some thousand kilometers long, the ring failure clearing may occur at successive times: first the protection fiber is repaired and only thereafter (even after several days) the working fiber is repaired. The temporary situation is depicted in Fig. 4 in which it is noted that, in accordance with the ITU-T Recommendation G. 841, the protection fiber of the E-D span is not used, even if it is available. The messages exchanged by the various network elements are reproduced on Fig. 5 (very similar to the graphs shown in ITU-T G. 841).

At the top of Fig. 5 there are reproduced the messages exchanged by the various network elements in the presence of a ring failure (the one of Fig. 2) on the span D-E. The nodes D and E, adjacent to the failure, send respective signalings SF_R,E/D,1,BR-SW and SF-R,D/E,1,BR-SW. The node E that is adjacent to the failure also sends an RR_R signal (RR_R,D/E,0,BR-SW) or a command transmitted over the short path as acknowledgement of bridge ring request received on the long path.

As soon as the failure concerning the protection fiber is cleared (Fig. 4), there is cessation of the respective alarm. According to the present invention, when the node (D) that was seeing the ring failure (and that still sees the failure on the high-priority fiber) detects the cessation of the alarm on the protection fiber, it initializes an internal timer and does not take any further action until such timer expires. In this way one takes precautions against possible oscillations of the alarms on the fiber which could result in HP traffic interrupts. In other words, the function of the timer is to avoid that a transitory restoration of the protection fiber could be interpreted as an actual and definitive restoration. Advantageously, according to the present invention, the duration of timer is equal to the ring or span WTR (Wait Time to Restore).

With specific reference to Figures 2 and 3, the node that still sees the failure on the high-priority fiber is node D that will activate a timer inside it. Obviously, since it will be not known a priori if and where a failure will occur, in accordance with the invention, every node of the ring network shall be provided with an internal timer to be activated should it be necessary.

At the timer expiration, now being sure that the ring failure has become a span failure (the LP fibers having been restored) the node/s that sees/see the ring failure starts/start the span failure management. In order to avoid misconnections on the paths, every node affected by the ring protection maintains active the traffic pre-emption on the protection channels until the instant when it no longer receives any ring signaling from none of the two sides. When such signaling ceases, the node enters a pass-through state for the K-bytes contemplated by the protection protocol and maintains the AIS on the low-priority (LP) paths, previously used to manage the ring failure, for a time at least equal to the propagation time of the K-bytes on the ring. In such a way, both HP paths and LP paths do not run the risk of providing misconnections.

Afterwards, the path nodes still affected by the working fiber cut in a span (D-E in Fig. 4), perform the span protection by following the conventional procedure depicted in the bottom of the graph of Fig. 5. From this point on, the protection mechanism of the ring corresponds to the conventional mechanism defined for instance in ITU-T G. 841. That is to say, when also the span failure is cleared/restored, that the network has again the full capacity and the full use of both the working and protection channels (sequence not shown in the diagram of Fig. 5).

Although the present invention has been described with reference to the situation of ring networks affected by multiple failures for clarity, it is apparent that the term "failure" is to be intended as comprising faults proper on the fiber, in network elements or in components thereof, but also signal or operator-command degradation that can be defined on the whole as "events". Hence "span events" comprise: SF_S, SD_S, SF_P, SD_P and commands (EXER_S, MS_S); "ring events" comprise SF_R and SD_R.

For the meaning of abbreviations and terms as used in this description and in the drawings, reference should be made to the aforesaid ITU-T Recommendation G. 841.

It is apparent that several modifications, adaptations and variations can be imparted to the method, to the frame and to the node according to the present invention without departing from the scope defined by the following claims which are all intended to be an integral part of the present description.

## Claims

1. Method for managing the transition between a ring event and a span event in a telecommunications network with a ring topology protected by a traffic protection mechanism in which signals arranged as bytes frames are transmitted, said ring network comprising
nodes or network elements; and
spans of optical fibers, said optical fiber spans connecting the network elements to form working channels (HP) and protection channels (LP),
the method comprising the step, performed by the nodes adjacent to the ring failure, of sending suitable ring failure signalings and being **characterized by** the steps of
verifying that the protection channels (LP) have been restored;
in the case where the verification is positive, maintaining the protection corresponding to a ring event for a predetermined time; and
once such predetermined time has elapsed, managing the event as a span event.

2. Method according to claim 1, **characterized in that** said step of maintaining the protection corresponding to a ring event for a predetermined time comprises the step, performed by the node adjacent to the event that sees the event on the working channel (HP), of activating a timer inside it.

3. Method according to claim 2, **characterized in that** the step of managing the event as a span event is started not before the expiration of said timer.

4. Network element capable of managing the transition between a ring event and a span event in a telecommunications network with a ring topology protected by a traffic protection mechanism in which signals arranged as bytes frames are transmitted, said ring network comprising:
nodes or network elements; and
spans of optical fibers, said optical fiber spans connecting the network elements to form a ring and comprising working channels (HP) and protection channels (LP),
the network element comprising means for generating and sending suitable ring failure signalings and being **characterized by** comprising:
means for verifying that the protection channels (LP) have been restored;
means for maintaining the protection corresponding to a ring event for a predetermined time in the case where the verification is positive; and
means for managing the event as a span event once such predetermined time has elapsed.

5. Network element according to claim 4, **characterized in that** said means for maintaining the protection corresponding to a ring event for a predetermined time comprise a timer inside the network element.

6. Computer program comprising computer program code means adapted to carry out all the steps of the method according to claims 1 to 3 when said program is run on a computer.

7. Computer-readable medium having a program recorded thereon, said computer-readable medium comprising program code means adapted to carry out all the steps of the method according to claims 1 to 3 when said program is run in a computer.
